# DEMANDE DE BREVET EUROPEEN

(11) **EP 2 988 012 A1**
(43) Date de publication de la demande: **24.02.2016**
(21) Numéro de dépôt: 15177607.7
(22) Date de dépôt: 21.07.2015
(51) Int. Cl.: F16D 23/04, F16D 13/14, F16D 13/20

(54) **SYNCHRONISEUR, PIGNON FOU ET BOITE DE VITESSES D'UN VEHICULE AUTOMOBILE**

(30) Priorité: 14.08.2014 FR 1457811
(71) Demandeur: Peugeot Citroen Automobiles S.A., 78140 Vélizy Villacoublay (FR)
(72) Inventeur: LELASSEUX, Xavier, 92000 Nanterre (FR); FALCOZ, Marc, 78100 St Germain en Laye (FR); MITUKIEWICZ, Grzegorz Jakub, 91-168 Lodz (PL)

(57) **Abrégé**

L'invention concerne un synchroniseur et un pignon fou de boite de vitesses d'un véhicule automobile.

Le synchroniseur comprend une rondelle déformable (6) dont la dilation permet de mettre en friction un anneau de friction (4) du synchroniseur et une couronne de friction (3) du pignon fou. Le procédé de pilotage de la boite de vitesses est également simplifié.

L'invention s'applique aux boites de vitesses manuelles ou automatiques.

## Description

Le domaine de l'invention concerne une boite de vitesses d'un véhicule automobile et un procédé de pilotage d'une boite de vitesse.

La boite de vitesses d'un groupe motopropulseur permet de synchroniser en rotation l'arbre de sortie d'un moteur et l'arbre de l'essieu moteur. Pour cela, une boite de vitesses conventionnelle comprend des synchroniseurs et des crabots permettant tout d'abord de sélectionner le rapport de vitesse et ensuite de transmettre le couple moteur.

Le document brevet FR2750183A1 déposé par la demanderesse décrit un synchroniseur d'une boite de vitesses. La boite de vitesse coopère avec un arbre sur lequel des pignons fous sont montés libres en rotation et immobiles axialement. Le synchroniseur comprend un moyeu pouvant coulisser axialement et déplacer une bague de friction ayant des cannelures venant coopérer axialement avec les dentures d'une pièce annulaire fixe à un pignon fou présentant une face tronconique. La synchronisation est réalisée par la friction des faces du manchon jusqu'au crabotage de ses cannelures avec la denture des pignons fous.

Le pilotage de la boite de vitesses comprend une première étape de synchronisation, puis une fois les régimes de rotation égalisés, le synchroniseur s'efface via la fonction de dévirage pour permettre d'engager les crabots qui servent à transmettre le couple moteur de la transmission.

Ce synchroniseur est complexe et génère des pics dans la commande de la boite de vitesses. Ces pics présentent des désagréments au conducteur.

Il existe donc un besoin d'améliorer l'agrément de conduite d'un véhicule automobile et de simplifier la boite de vitesses et son pilotage.

Plus précisément, l'invention concerne un synchroniseur d'une boite de vitesses comprenant un moyeu coulissant axialement destiné à être entrainé en rotation par un arbre. Selon l'invention il comprend également, engrenés par le moyeu et montés concentriques au moyeu, au moins une rondelle déformable s'interposant axialement entre le moyeu et une rondelle de butée, et un anneau de friction entourant la rondelle déformable et la rondelle de butée, la rondelle déformable étant apte à se dilater lorsqu'elle est mise en écrasement entre le moyeu et la rondelle de butée de sorte que la dilatation de la rondelle déformable dilate la surface périphérique de l'anneau de friction.

Selon une variante, l'anneau de friction comprend plusieurs surfaces de friction sur la surface périphérique.

Selon une variante, le moyeu est apte à coulisser axialement vers la rondelle de butée pour écraser la rondelle déformable.

Selon une variante, le moyeu, la rondelle déformable, l'anneau de friction et la rondelle de butée ont une forme en denture pour s'engrener mutuellement.

Selon une variante, le moyeu, la rondelle déformable, l'anneau de friction et la rondelle de butée sont liés en translation par au moins une pièce de maintien.

Il est prévu dans le cadre de l'invention, un pignon fou d'une boite de vitesses comprenant un corps. Selon l'invention, le pignon fou comprend également une couronne de friction, fixée au corps, ayant un rebord annulaire présentant une surface radiale de friction de sorte à coopérer avec un anneau de friction d'un synchroniseur positionné à l'intérieur du rebord annulaire. Le synchroniseur est conforme à l'une des variantes de l'invention décrites précédemment.

Selon une variante, le corps et la couronne de friction coopèrent par des cannelures pour permettre le coulissement axial de la couronne de friction.

L'invention prévoit une boite de vitesses comprenant au moins un synchroniseur coopérant avec un pignon fou, le synchroniseur et le pignon fou sont conformes à l'une quelconque des variantes décrites précédemment.

Il est prévu un procédé de pilotage d'une boite de vitesses conforme à l'invention et reliant un premier arbre avec un deuxième arbre. Le procédé comporte les étapes suivantes :
- la commande d'un déplacement axial du moyeu du synchroniseur ou de la couronne de friction du pignon fou,
- le commencement de la synchronisation du pignon fou et du moyeu par une friction axiale de la rondelle de butée avec la couronne de friction,
- la dilation de la rondelle déformable pour mettre en friction radiale l'anneau de friction et la couronne de friction,
- lorsque la synchronisation est opérée, la commande d'un couple de transmission entre le premier arbre et le deuxième arbre.

L'invention prévoit un véhicule automobile comprenant une boite de vitesses conforme à l'invention.

Grâce à l'invention, l'agrément de conduite est amélioré par une mise en friction simplifiée du moyeu et du pignon fou. L'anneau de friction et la couronne de friction assurent la synchronisation et la mise en transmission du couple moteur de façon graduelle. La mise en friction évite les pics lors de la phase de synchronisation.

De plus, l'invention permet de s'affranchir des étapes d'armement, de synchronisation puis de dévirage et crabotage qui génèrent les effets indésirables au conducteur.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
La figure 1 représente une première coupe en deux dimensions du synchroniseur selon l'invention.
La figure 2 représente une deuxième coupe en deux dimensions du synchroniseur selon l'invention.
La figure 3 représente une vue en trois dimensions d'une rondelle déformable.
La figure 4 représente une vue en trois dimensions d'un synchroniseur selon l'invention.

L'invention s'applique à une boite de vitesses automatique ou manuelle d'un véhicule automobile. La boite de vitesses selon l'invention comprend un arbre primaire, relié généralement au vilebrequin d'un moteur thermique et un arbre secondaire relié à l'arbre de l'essieu moteur.

Dans le cas d'une boite de vitesses automatique le groupe motopropulseur comprend par ailleurs un calculateur de supervision et un calculateur de boite de vitesses pour commander les actionneurs de la boite de vitesses. En fonction des instructions de commande du conducteur, le calculateur de supervision détermine les consignes de changement de vitesse, de couple moteur ou de régime des arbres et un calculateur transmet les consignes spécifiques à chaque actionneur.

La boite de vitesses comprend des synchroniseurs mobiles axialement sur l'arbre primaire et l'arbre secondaire que des actionneurs peuvent déplacer pour procéder aux opérations de changement de vitesses. Les synchroniseurs sont utilisés pour synchroniser le régime de rotation de l'arbre primaire et l'arbre secondaire et pour sélectionner un rapport de vitesse.

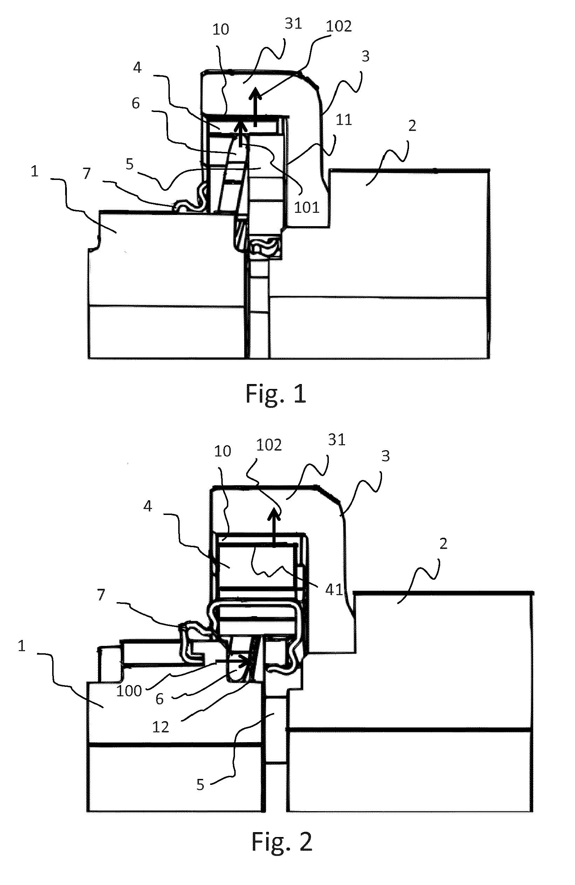

Plus précisément, les figure 1 et figure 2 décrivent un mode de réalisation d'un synchroniseur selon l'invention selon deux angles de coupe. Ce synchroniseur est monté sur l'arbre primaire de la boite de vitesses. Plusieurs synchroniseurs équivalents sont montés sur l'arbre primaire ainsi que sur l'arbre secondaire. L'arbre primaire et l'arbre secondaire ne sont pas représentés sur les figures 1 et figure 2.

Le synchroniseur comprend un moyeu 1 entrainé en rotation par l'arbre primaire. Le moyeu 1 est libre axialement sur l'arbre primaire et fixe en rotation. Un actionneur peut exercer un effort axial sur le moyeu 1 afin qu'il coulisse le long de l'axe de l'arbre primaire. Un ensemble formé par le moyeu 1, une rondelle déformable 6, une rondelle de butée 5 et un anneau de friction 4 est lié en translation par une pièce de maintien 7 lors du déplacement du moyeu 1.

On notera par ailleurs que le moyeu 1, la rondelle déformable 6, la rondelle de butée 5 et l'anneau de friction 4 sont concentriques à l'arbre primaire et ont une forme crénelée de sorte à s'encastrer axialement entre eux et à être entrainés en rotation ensembles lorsque le moyeu 1 est mis en rotation.

Plus précisément, le moyeu 1 comprend des cavités 12, une d'elles est représentée sur la figure 2, dans lesquelles la partie annulaire centrale de la rondelle déformable 6 s'encastre. La partie annulaire centrale entoure le moyeu 1 sur sa périphérie dans les cavités 12. Le moyeu 1, la rondelle déformable 6 et la rondelle de butée 5 sont disposés axialement sur l'arbre primaire. La rondelle déformable 6 s'interpose entre le moyeu 1 et la rondelle de butée 5.

De plus, la rondelle de butée 5 est en contact d'une part sur sa surface centrale avec la face du moyeu 1 perpendiculaire à l'axe de rotation, et d'autre part sur sa périphérie avec la partie périphérique de la rondelle déformable 6. Le moyeu 1 a une forme crénelée sur sa périphérie permettant l'encastrement avec la partie centrale de la rondelle déformable 6 et celle de la rondelle de butée 5. Lorsque le moyeu 1 est en rotation, il peut alors entrainer en rotation les deux rondelles 6 et 5.

De plus, l'anneau de friction 4 entoure la périphérie de la rondelle déformable 6 et la rondelle de butée 5. L'anneau de friction 4 comprend une surface intérieure ayant un diamètre intérieur en contact avec la rondelle déformable 6. De plus, il comprend une surface périphérique ayant un diamètre extérieur présentant une surface de friction. La surface périphérique opère en tant que surface de friction avec un pignon fou. Le diamètre extérieur est supérieur au diamètre intérieur et tous deux ont un profil crénelé permettant l'encastrement de l'anneau de friction 4, de la rondelle déformable 6 et de la rondelle de butée 5, et de plus permettant au moyeu 1 de les engrener. L'anneau de friction 4 est donc entrainé en rotation par le moyeu 1 indirectement par la rotation de la rondelle déformable 6 et la rondelle de butée 5.

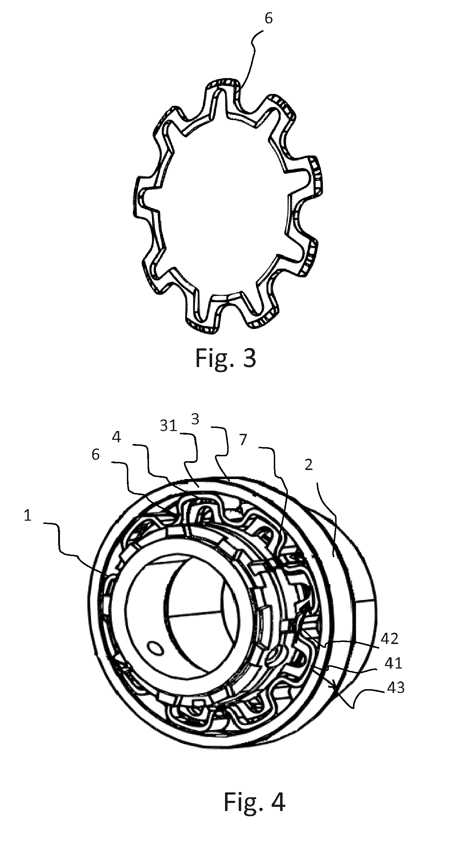

Comme représenté sur la figure 4, on notera que l'anneau de friction 4 présente une surface périphérique radiale pouvant se dilater et ayant plusieurs surfaces de friction 41 dont la normale 43 est perpendiculaire au vecteur 42 de la vitesse angulaire de l'anneau de friction 4 lorsqu'il est entrainé en rotation. Les surfaces de friction 41 sont pour ainsi dire orientées vers l'extérieur, à la différence des solutions conventionnelles. On désigne par une surface de friction 41 une zone de liaison entrant en friction avec une surface de friction du pignon fou pour la synchronisation et la transmission du couple moteur.

On notera qu'une surface de friction 41 peut être une surface courbe ou une surface constituée de plans droits formant sensiblement une surface courbée. A la différence de l'état de la technique, la vitesse de rotation angulaire ne provoque pas la friction entre l'anneau de friction 4 et la couronne de friction 3.

La figure 3 représente la rondelle déformable 6. La géométrie mécanique de la rondelle déformable 6 est telle que, lorsque la partie annulaire centrale est écrasée par un effort axial 100, l'effort axial 100 provoque une déformation de la rondelle déformable 6. La périphérie de la rondelle déformable 6 se dilate augmentant son diamètre extérieur. Une force radiale 101 s'exerce alors sur l'anneau de friction 4. La configuration du synchroniseur empêche la partie centrale annulaire de se dilater car les cavités du moyeu contraignent son diamètre intérieur. La rondelle déformable 6 est par exemple une rondelle de type Belleville.

Ainsi, lors d'une dilatation de la rondelle déformable 6, l'anneau de friction 4 se dilate également du fait de la force radiale 101 s'exerçant sur sa surface intérieure, augmentant ainsi le diamètre de sa surface périphérique. L'anneau de friction 4 exerce à son tour une force radiale 102 sur sa surface de friction 41. L'anneau de friction 4 présente donc une surface périphérique radiale pouvant s'étendre, lorsqu'un effort axial 100 est exercé sur la partie centrale annulaire de la rondelle déformable 6, pour entrer en friction avec le rebord 31 d'une couronne de friction 3 d'un pignon fou.

La surface de friction totale est constituée des surfaces de friction radiales 41, s'étendant parallèlement à l'axe de rotation, présentant une courbure et réparties sur 360 degrés de sorte à former sensiblement un anneau extérieur de friction. Lors de la dilatation, le diamètre de la surface périphérique de l'anneau de friction 4 est sensiblement égal au diamètre intérieur du rebord 31 de la couronne 3.

Il est prévu plusieurs pièces de maintien 7 réparties angulairement autour de l'axe de rotation de l'arbre primaire pour maintenir liés ensembles les rondelles 5, 6, l'anneau de friction 4 et le moyeu 1. Des passages formés par les crénelures des rondelles 5, 6 et de l'anneau de friction 4 permettent le passage des pièces de maintien 7 et des cavités dans le moyeu 1 et la rondelle de butée 5, visibles sur la figure 3, leur maintien.

Dans une variante, le synchroniseur comprend plusieurs rondelles déformables 6 réparties sur la surface de la rondelle de butée 5 s'interposant entre le moyeu 1 et la rondelle de butée 5. Les rondelles déformables 6 sont également positionnées sous l'anneau de friction 4 de sorte que leur dilatation provoque une dilatation de l'anneau de friction 4.

La boite de vitesses selon l'invention comprend des pignons fous coopérant avec les synchroniseurs. Les figures 1 et 2 décrivent un de ces pignons fous. Le pignon fou est formé d'un corps 2 libre en rotation autour de l'axe de l'arbre primaire et une couronne de friction 3 fixée au corps 2. La couronne de friction est immobile par rapport au corps 2. De plus, le corps 2 engrène avec un pignon, fixe en rotation, avec un arbre secondaire, non représentés sur la figure 1 et la figure 2. Le pignon fou de l'arbre primaire et le pignon fixe de l'arbre secondaire forment un rapport de vitesse.

Selon l'invention, la couronne de friction 3 du pignon fou 2 comprend un rebord 31 s'étendant autour de l'anneau de friction 4 en regard de la surface extérieure de l'anneau de friction 4. Le rebord 31 de la couronne de friction 3 s'étend parallèlement à l'axe de rotation du moyeu 1, des rondelles 5, 6 et de l'anneau de friction 4.

La couronne de friction 3 est positionnée de sorte qu'un jeu radial 10 sépare la surface extérieure de l'anneau de friction 4 et la surface intérieure du rebord 31. Ainsi, lorsque le moyen 1 n'exerce pas un effort axial sur la rondelle déformable 6, l'anneau de friction 4 et la couronne de friction 3 ne sont pas couplés. Le jeu permet ainsi d'éviter la présence d'un couple résiduel.

On notera également que le jeu radial 10 permet la lubrification du synchroniseur et de la couronne de friction 3.

Ainsi, lorsque le moyen 1 exerce un effort axial 100 sur la rondelle déformable 6, l'anneau de friction 4 et la couronne de friction 3 entrent en friction. L'anneau de friction 4 exerce un effort radial 102 sur la face intérieure du rebord 31 de la couronne 3. La friction est suffisante pour transmettre un couple moteur entre l'arbre primaire et l'arbre secondaire. Lorsque l'anneau de friction 4 est entrainé en rotation, la force de friction est suffisante pour entrainer également la couronne 3 du pignon fou 2.

A la différence des synchroniseurs et pignons fous conventionnels, les surfaces de friction de l'anneau de friction 4 et de la couronne de friction 3 sont planes et coopèrent par un effort de dilatation perpendiculaire au vecteur de vitesse angulaire de rotation. Les surfaces de friction ne comportent pas de dents s'entremêlant pour transmettre la vitesse de rotation et le couple de transmission.

De plus, la friction est graduelle, indépendante du couple de rotation du moyeu 1, mais dépendante de l'effort 100 appliqué sur la rondelle déformable 6. Il permet dans un premier temps d'exercer une force de friction suffisante pour la réalisation d'une opération de synchronisation de l'arbre primaire et l'arbre secondaire. En augmentant la dilatation de l'anneau de friction 4, la force de friction peut être suffisante pour coupler l'anneau de friction 4 et la couronne de friction 3 pour transmettre un couple moteur.

Par ailleurs, la couronne de friction 3 peut être en contact avec la rondelle de butée 5 lorsque le moyeu 1 se déplace axialement pour écraser la rondelle déformable 6. Un jeu axial 11 est présent entre la rondelle de butée 5 et la couronne de friction 3. Mais quand la rondelle de butée 5 se déplace dans le jeu axial 11, celle-ci entre en friction avec la couronne de friction 3.

On notera par ailleurs que le jeu axial 11 permet la lubrification du synchroniseur et de la couronne de friction 3.

En variante, la couronne de friction 3 est mobile par rapport au corps 2 du pignon fou. La couronne de friction 3 peut être fixée au corps 2 au moyen de cannelures permettant un déplacement axial de la couronne 3 par rapport au corps 2. Un actionneur peut exercer un effort axial sur la couronne de friction 3 afin qu'il coulisse le long de l'axe de l'arbre primaire. Ainsi il n'est pas nécessaire de déplacer le moyeu 1 pour exercer l'effort axial de pression sur la rondelle déformable 6. Dans cette variante, lorsque la couronne de friction 3 se déplace axialement, la rondelle de butée 5 est déplacée pour écraser la rondelle déformable 6 contre le moyeu 1.

La figure 4 représente une vue en trois dimensions du synchroniseur et du pignon fou. La rondelle déformable 6 est positionnée dans le synchroniseur encastrée entre le moyeu 1 et la rondelle de butée 5, cachée sur la figure. L'anneau de friction 4 est monté pour entourer la rondelle déformable 6. Le pignon fou comprend un corps 2 et la couronne de friction 3 dont le rebord 31 entoure l'anneau de friction 4. Lorsque le moyeu 1 ou la couronne de friction 3 sont déplacées axialement, la rondelle déformable 6 est écrasée et provoque la dilation de l'anneau de friction 4 vers la couronne de friction 3.

Le changement d'un rapport de vitesse de la boite de vitesses comprend plusieurs étapes pour la synchronisation de l'arbre primaire et de l'arbre secondaire et pour la transmission du couple moteur. Le procédé de pilotage de la boite de vitesses comprend les étapes suivantes:
- la commande d'un déplacement axial du moyeu 1 du synchroniseur ou de la couronne de friction 3 du pignon fou au moyen des actionneurs associés,
- le commencement de la synchronisation du pignon fou 2 et du moyeu 1 par une friction axiale de la rondelle de butée 5 avec la couronne de friction 3,
- la dilation de la rondelle déformable 6 pour mettre en friction radiale l'anneau de friction 4 et la couronne de friction 3,
- lorsque la synchronisation est opérée, la commande d'un couple de transmission entre le premier arbre et le deuxième arbre.

Dans le cas d'une boite de vitesses pilotée le calculateur de supervision, associé éventuellement au calculateur de la boite de vitesses, commande les étapes du procédé de pilotage.

Lorsqu'il est nécessaire désélectionner le rapport de vitesse engagé, le moyeu 1 ou la couronne de friction 3 est déplacé. La rondelle déformable revient alors à sa forme de repos. Il n'y a alors plus de friction entre l'anneau de friction 4 et le rebord 31 de la couronne 3.

Le synchroniseur propose un mécanisme de sélection d'un rapport de vitesse simplifié, à moindre coût pour un encombrement également réduit. Par ailleurs, le procédé de commande de la boite de vitesses est également simplifié. Il évite la mise en place de moyens de filtration habituellement utilisés lors des phases de synchronisation, dévirage et crabotage d'une boite de vitesses conventionnelle.

## Revendications

1. Synchroniseur d'une boite de vitesses comprenant un moyeu (1) coulissant axialement destiné à être entrainé en rotation par un arbre, **caractérisé en ce qu'**il comprend également, engrenés par le moyeu (1) et montés concentriques au moyeu (1), au moins une rondelle déformable (6) s'interposant axialement entre le moyeu (1) et une rondelle de butée (5), et un anneau de friction (4) entourant la rondelle déformable (6) et la rondelle de butée (5), la rondelle déformable (6) étant apte à se dilater lorsqu'elle est mise en écrasement entre le moyeu (1) et la rondelle de butée (5) de sorte que la dilatation de la rondelle déformable (6) dilate la surface périphérique de l'anneau de friction (4).

2. Synchroniseur selon la revendication 1, **caractérisé en ce que** l'anneau de friction (4) comprend plusieurs surfaces de friction (41) sur la surface périphérique.

3. Synchroniseur selon l'une quelconque des revendications précédentes, **caractérisé en ce que** le moyeu (1) est apte à coulisser axialement vers la rondelle de butée (5) pour écraser la rondelle déformable (6).

4. Synchroniseur selon l'une quelconque des revendications précédentes, **caractérisé en ce que** le moyeu (1), la rondelle déformable (6), l'anneau de friction (4) et la rondelle de butée (5) ont une forme en denture pour s'engrener mutuellement.

5. Synchroniseur selon l'une quelconque des revendications précédentes, **caractérisé en ce que** le moyeu (1), la rondelle déformable (6), l'anneau de friction (4) et la rondelle de butée (5) sont liés en translation par au moins une pièce de maintien (7).

6. Pignon fou d'une boite de vitesses comprenant un corps (2), **caractérisé en ce qu'**il comprend également une couronne de friction (3), fixée au corps (2), ayant un rebord annulaire (31) présentant une surface radiale de friction de sorte à coopérer avec un anneau de friction (4) d'un synchroniseur positionné à l'intérieur du rebord annulaire (31), le synchroniseur étant conforme à l'une quelconque des revendications 1 à 5.

7. Pignon fou selon la revendication 6, **caractérisé en ce que** le corps (2) et la couronne de friction (3) coopèrent par des cannelures pour permettre le coulissement axial de la couronne de friction (3).

8. Boite de vitesses comprenant au moins un synchroniseur coopérant avec un pignon fou, **caractérisée en ce que** le synchroniseur est conforme à l'une quelconque des revendications 1 à 5 et le pignon fou est conforme à la revendication 6 ou 7.

9. Procédé de pilotage d'une boite de vitesses conforme à la revendication 8 et reliant un premier arbre avec un deuxième arbre, **caractérisé en ce qu'**il comporte les étapes suivantes :
- la commande d'un déplacement axial du moyeu (1) du synchroniseur ou de la couronne de friction (3) du pignon fou,
- le commencement de la synchronisation du pignon fou (2) et du moyeu (1) par une friction axiale de la rondelle de butée (5) avec la couronne de friction (3),
- la dilation de la rondelle déformable (6) pour mettre en friction radiale l'anneau de friction (4) et la couronne de friction (3),
- lorsque la synchronisation est opérée, la commande d'un couple de transmission entre le premier arbre et le deuxième arbre.

10. Véhicule automobile comprenant une boite de vitesses, **caractérisé en ce que** la boite de vitesses est conforme à la revendication 8.
